# EUROPEAN PATENT APPLICATION

(11) **EP 4 503 623 A1**
(43) Date of publication of application: **05.02.2025**
(21) Application number: 23864653.3
(22) Date of filing: 11.09.2023
(51) Int. Cl.: H04N 21/431

(54) **VIDEO PROCESSING METHOD, APPARATUS AND DEVICE, AND STORAGE MEDIUM**

(30) Priority: 15.09.2022 CN 202211125059
(71) Applicant: Beijing Zitiao Network Technology Co., Ltd., Beijing 100190 (CN)
(72) Inventor: ZHANG, Wenshu, Beijing 100028 (CN); XIE, Mengting, Beijing 100028 (CN); MIAO, Huayun, Beijing 100028 (CN); LI, Ziwei, Beijing 100028 (CN); YANG, Yi, Beijing 100028 (CN)
(74) Representative: Dentons UK and Middle East LLP
(86) International application number: PCT/CN2023/117959
(87) International publication number: WO 2024/055921

(57) **Abstract**

Provided in the present disclosure are a video processing method, apparatus and device, and a storage medium. The method comprises: firstly, in response to a preset trigger operation acting on a video playing page of a target video, switching the video playing page to an audio playing page, and playing an audio file of the target video on the audio playing page; and then, in an audio cover display area on the audio playing page, synchronously displaying a video picture in the target video on the basis of the playing progress of the audio file. Therefore, by means of the embodiments of the present disclosure, the effect of playing, on an audio playing page, an audio file corresponding to a target video, and synchronously displaying, in an audio cover display area, a video picture in the target video can be achieved, thereby enriching an interaction function based on a video, and improving the user experience.

## Description

The present application claims the priority to Chinese patent application No. 202211125059.4, filed on September 15, 2022, the entire disclosure of which is incorporated herein by reference in its entirety as a part of the present application.

### TECHNICAL FIELD

Embodiments of the present disclosure relate to a data processing method, apparatus, device and a storage medium.

### BACKGROUND

With the continuous development of video processing technology, people's demands for video-related functions are becoming more and more diversified. Therefore, how to enrich video-related functions to meet more needs of users and thus enhance user experience, is a technical problem that needs to be solved urgently.

### SUMMARY

In order to solve the above technical problem, the present disclosure provides a video processing method, apparatus, device and a storage medium, which can enrich video-based interactive functions and improve user experience.

In a first aspect, the present disclosure provides a video processing method, the method comprises:
switching, in response to a preset trigger operation acting on a video playing page of a target video, to an audio playing page from the video playing page, and playing an audio file of the target video on the audio playing page;
presenting, based on a playing progress of the audio file, a video picture in the target video synchronously in an audio cover display region on the audio playing page.

In an alternative embodiment, the method further comprises:
updating, in response to an adjustment operation on the playing progress of the audio file, the video picture presented in the audio cover display region synchronously.

In an alternative embodiment, the method further comprises:
entering, in response to a trigger operation on the audio cover display region, a video playing pure mode, and playing the target video based on the video playing pure mode; wherein the video playing pure mode is used to hide displaying of a preset video playing functional control.

In an alternative embodiment, the method further comprises:
exiting, in response to a preset return operation acting on the video playing pure mode, the video playing pure mode, and returning to the audio playing page;
playing, based on a playing progress of the target video in the video playing pure mode, the audio file of the target video on the audio playing page.

In an alternative embodiment, the method further comprises:
determining, in response to a preset switching operation acting on the audio playing page, a target switching audio file based on a video information stream corresponding to the target video, wherein the target switching audio file is an audio file of a target switching video corresponding to the target video;
playing the target switching audio file on the audio playing page.

In an alternative embodiment, the method further comprises:
switching, in response to a preset return operation acting on the audio playing page, back to the video playing page from the audio playing page, and playing the target video on the video playing page based on the playing progress of the audio file.

In an alternative embodiment, wherein the switching, in response to a preset trigger operation acting on a video playing page of a target video, to an audio playing page from the video playing page, comprises:
presenting, in response to a multi-finger pinch operation acting on the video playing page of the target video, the video picture currently displayed on the video playing page which is zoomed out along an operation direction of the multi-finger pinch operation, in the audio cover display region on the audio playing page.

In an alternative embodiment, wherein the switching, in response to a preset trigger operation acting on a video playing page of a target video, to an audio playing page from the video playing page, comprises:
switching, in response to a long press operation on an audio playing mode switching control on the video playing page of the target video, to the audio playing page from the video playing page.

In an alternative embodiment, wherein the target video belongs to a first video collection, and the method further comprises:
determining, in response to a preset collection video switching operation acting on the audio playing page, a target switching collection video based on the first video collection;
playing an audio file of the target switching collection video on the audio playing page.

In a second aspect, the present disclosure provides a video processing apparatus, comprising:
a first playing module, configured to switch, in response to a preset trigger operation acting on a video playing page of a target video, to an audio playing page from the video playing page, and play an audio file of the target video on the audio playing page;
a first presenting module, configured to present, based on a playing progress of the audio file, a video picture in the target video synchronously in an audio cover display region on the audio playing page.

In a third aspect, the present disclosure provides a computer-readable storage medium, storing instructions thereon, wherein when the instructions are run on a computer device, the computer device is caused to implement the above method.

In a fourth aspect, the present disclosure provides a video processing device, comprising: a memory, a processor, and a computer program stored on the memory and executable by the processor, wherein when the processor executes the computer program, the above method is implemented.

In a fifth aspect, the present disclosure provides a computer program product, comprising a computer program or computer instructions, wherein when the computer program or computer instructions are executed by a processor, the above method is implemented.

### BRIEF DESCRIPTION OF DRAWINGS

The accompanying drawings here are incorporated into the specification and form a part of this specification, showing embodiments that comply with the present disclosure, and are used together with the specification to explain the principles of the present disclosure.

In order to describe the embodiments of the present disclosure more clearly, the drawings required in the description of the embodiments are briefly introduced below. Apparently, for those of ordinary skill in the art, other drawings may also be obtained according to these drawings without creative efforts.
FIG. 1 is a flowchart of a video processing method provided by an embodiment of the present disclosure;
FIG. 2 is a schematic diagram of a video playing page provided by an embodiment of the present disclosure;
FIG. 3 is a schematic diagram of an audio playing page provided by an embodiment of the present disclosure;
FIG. 4 is a flowchart of another video processing method provided by an embodiment of the present disclosure;
FIG. 5 is a schematic diagram of a page of a video playing pure mode provided by an embodiment of the present disclosure;
FIG. 6 is a schematic structural diagram of a video processing apparatus provided by an embodiment of the present disclosure; and
FIG. 7 is a schematic structural diagram of a video processing device provided by an embodiment of the present disclosure.

### DETAILED DESCRIPTION

In order to better understand the above-described objectives, features, and advantages of the present disclosure, the solution of the present disclosure will be further described below. It should be noted that in case of no conflict, the embodiments of the present disclosure and the features in the embodiments may be combined with each other.

Many specific details have been elaborated in the following description to facilitate full understanding of the present disclosure, but the present disclosure may also be implemented in other ways different from those described here; obviously, the embodiments in the specification are only some of the embodiments of the present disclosure, rather than all of them.

With the continuous development of video processing technology, people's demands for video-related functions are becoming more and more diversified. Therefore, how to enrich video-related functions to meet more needs of users and thus enhance user experience, is a technical problem that needs to be solved urgently.

Therefore, an embodiment of the present disclosure provides a video processing method. Firstly, in response to a preset trigger operation acting on a video playing page of a target video, the video playing page is switched to an audio playing page, and an audio file of the target video is played on the audio playing page; and then, in an audio cover display region on the audio playing page, a video picture in the target video is synchronously presented based on a playing progress of the audio file. As can be seen, the embodiment of the present disclosure can achieve the effect of playing the audio file corresponding to the target video on the audio playing page and synchronously presenting the video picture in the target video in the audio cover display region, thus enriching the video-based interactive function and improving the user experience.

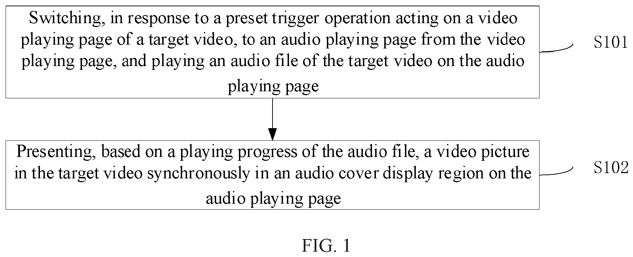

Based on this, an embodiment of the present disclosure provides a video processing method. Referring to FIG. 1, which is a flowchart of a video processing method provided by an embodiment of the present disclosure, the method includes:

S101: switching, in response to a preset trigger operation acting on a video playing page of a target video, to an audio playing page from the video playing page, and playing an audio file of the target video on the audio playing page.

The video processing method provided by the embodiment of the present disclosure can be applied to a client end; and for example, the client end can include a client end deployed on a smart phone, a client end deployed on a tablet computer, etc.

In the embodiment of the present disclosure, the target video can be any video played based on the video playing page; and specifically, the target video can be any video in the video information stream.

The audio file of the target video refers to a file composed of the audio data in the target video, which usually includes all the audio content in the target video. The audio file of the target video can be in any audio file format, such as MP3 format, etc.

In the embodiment of the present disclosure, the video playing page is switched to the audio playing page in response to a preset trigger operation acting on the video playing page of the target video. The preset trigger operation acting on the video playing page can include a long press operation triggered on an audio playing mode switching control on the video playing page. The audio playing mode switching control can be set at any position on the video playing page, such as the bottom position or the right position of the video playing page, etc.; and the audio playing mode switching control can be set to have any shape, such as a circular style or a square style, etc.

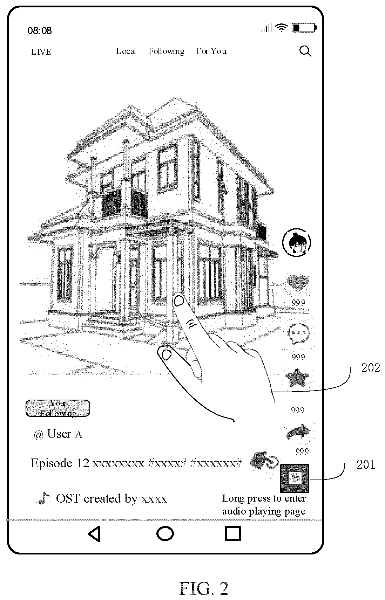

As shown in FIG. 2, which is a schematic diagram of a video playing page provided by an embodiment of the present disclosure, the target video is played on the video playing page, and an audio playing mode switching control 201 is set at the lower right corner of the video playing page, and a preset guide prompt "Long press to enter audio playing page" can be displayed below the audio playing mode switching control. When a long press operation on the audio playing mode switching control 201 on the video playing page of the target video is received, the video playing page is switched to an audio playing page, and the audio file of the target video continues to be played on the audio playing page based on the playing progress of the target video.

In an optional implementation, the preset trigger operation acting on the video playing page can further include a multi-finger pinch operation on the video playing page of the target video. The multi-finger pinch operation can include a two-finger pinch operation, a three-finger pinch operation, etc.

In another optional implementation, the preset trigger operation acting on the video playing page can further include a long press operation acting on a preset trigger region on the video playing page, wherein the preset trigger region can be a preset left region or a preset right region on the video playing page, etc.

In the embodiment of the present disclosure, in response to a multi-finger pinch operation acting on the video playing page of the target video, the video picture currently displayed on the video playing page is zoomed out along the operation direction of the multi-finger pinch operation and presented in an audio cover display region on the audio playing page. The audio cover display region is used to present the video picture of the target video, and in practical applications, the audio cover display region can be set as a video playing window in which the video playing page is scaled down for display, etc.

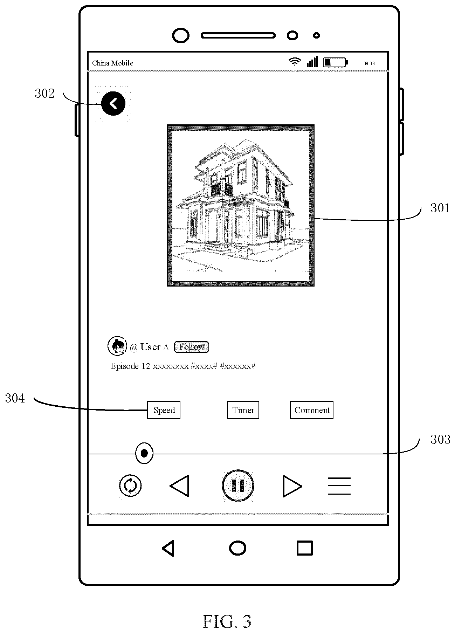

As shown in FIG. 2, when a multi-finger pinch operation 202 acting on the video playing page is received, the video picture currently displayed on the video playing page is zoomed out along the operation direction of the multi-finger pinch operation and presented in the audio cover display region 301 on the audio playing page as shown in FIG. 3, wherein FIG. 3 is a schematic diagram of an audio playing page provided by an embodiment of the present disclosure. Through the multi-finger pinch operation acting on the video playing page, the video picture currently displayed is triggered to be zoomed out and presented in the audio cover display region on the audio playing page, which meets the user's triggering expectation for the multi-finger pinch operation and improves the user's interactive experience.

In an optional implementation, in the process of switching from the video playing page of the target video to the audio playing page, an audio file corresponding to the target video is firstly obtained, and then the audio file continues to be played on the audio playing page based on the playing progress of the target video on the video playing page. For example, the playing progress of the target video on the video playing page is at 1 minute and 30 seconds, then the audio file corresponding to the target video will continue to be played from 1 minute and 30 seconds on the audio playing page after jumping from the video playing page to the audio playing page.

In practical applications, in the process of playing the audio file on the audio playing page, if the user wants to return to the video playing page, the current audio playing page can be switched back to the video playing page through a preset return operation acting on the audio playing page, and the target video continues to be played on the video playing page according to the playing progress of the audio file on the audio playing page.

In the embodiment of the present disclosure, the preset return operation on the audio playing page is used to trigger switching from the audio playing page back to the video playing page. The preset return operation acting on the audio playing page can include a click operation triggered on a return control on the audio playing page, a rightward slide operation on the audio playing page, etc.

As shown in FIG. 3, a return control 302 is set at the upper left corner of the audio playing page. When a click operation on the return control on the audio playing page is received, the audio playing page shown in FIG. 3 is switched back to the video playing page shown in FIG. 2, and the target video continues to be played on the video playing page according to the playing progress of the audio file.

S102: presenting, based on a playing progress of the audio file, a video picture in the target video synchronously in an audio cover display region on the audio playing page.

In the embodiment of the present disclosure, after the video playing page is switched to the audio playing page, in the process of playing the audio file corresponding to the target video on the audio playing page, the video picture in the target video can be synchronously presented in the audio cover display region on the audio playing page based on the playing progress of the audio file. Specifically, in the audio cover display region, the video picture corresponding to the playing progress of the audio file in the target video is presented synchronously. As shown in FIG. 3, the audio cover display region 301 can be set in the middle position of the audio playing page, but not limited to the middle position. According to the playing progress of the audio file, the video picture in the target video can be synchronously played in the audio cover display region 301.

In an optional implementation, in response to an adjustment operation on the playing progress of the audio file, the video picture of the target video presented in the audio cover display region is updated synchronously. The adjustment operation on the playing progress of the audio file can include a drag operation triggered on an audio playing manipulation progress bar set on the audio playing page, wherein the audio playing manipulation progress bar is used to control the playing progress of the audio file currently being played on the audio playing page. The adjustment operation on the playing progress of the audio file can also include an adjustment operation on the playing progress of audio files in other ways, which is not limited by the embodiment of the present disclosure.

For example, in the process of playing the audio file on the audio playing page shown in FIG. 3, the user can adjust the playing progress of the audio file by dragging the audio playing manipulation progress bar control 303, and correspondingly, based on the current playing progress of the audio file, the video picture of the target video presented in the audio cover display region 301 is synchronously updated.

In another optional implementation, in response to an adjustment operation on the playing speed of the audio file, the playing speed of the target video in the audio cover display region is synchronously updated. The adjustment operation on the playing speed of the audio file can include a click operation triggered on an audio speed playing manipulation control, wherein at least one playing speed is preset within the speed playing manipulation control, and the preset trigger operation on the speed playing manipulation control is used to realize a switching operation for the at least one playing speed.

For example, in the process of playing the audio file on the audio playing page shown in FIG. 3, the user can switch the playing speed of the audio file by clicking the audio speed playing manipulation control 304. Assuming that the playing speed of the audio file is switched to 1.5 times, correspondingly, the video picture of the target video is presented synchronously in the audio cover display region at 1.5 times speed.

In the video processing method provided by the embodiment of the present disclosure, firstly, in response to a preset trigger operation acting on a video playing page of a target video, the video playing page is switched to an audio playing page, and an audio file of the target video is played on the audio playing page; and then, in an audio cover display region on the audio playing page, a video picture in the target video is synchronously presented based on a playing progress of the audio file. As can be seen, the embodiment of the present disclosure can achieve the effect of playing the audio file corresponding to the target video on the audio playing page and synchronously presenting the video picture in the target video in the audio cover display region, thus enriching the video-based interactive function and improving the user experience.

In practical applications, in the process of playing the audio file and presenting the picture of the target video corresponding to the audio file on the audio playing page, the audio file currently being played can be switched through a preset switching operation acting on the audio playing page, so as to further enrich the video-based interactive function and improve the user experience.

The target video corresponding to the audio file played on the audio playing page can be an video in the video information stream issued by the server end to the client end, and the video information stream can include one or more videos that have been cached locally.

In the embodiment of the present disclosure, the preset switching operation acting on the audio playing page can include a click operation triggered on a preset switching control set on the audio playing page, and can also include an upward slide operation or a downward slide operation acting on the audio playing page, so as to realize the function of switching the audio file being played on the audio playing page.

In the embodiment of the present disclosure, when a preset switching operation acting on an audio playing page is received, firstly, a target switching audio file is determined based on the video information stream corresponding to the target video currently being presented, that is, based on an upward slide operation or a downward slide operation triggered by the user, the previous or next video adjacent to the target video in the video information stream is determined as a target switching video, and the audio file of the target switching video is determined as the target switching audio file; and then, the target switching audio file is played on the audio playing page, wherein the target switching audio file is the audio file of the target switching video corresponding to the target video.

In the embodiment of the present disclosure, based on the video information stream where the target video is located, the function of switching and playing the audio files of various videos in the video information stream can be realized on the audio playing page, which further enriches the video-based interactive function and improves the user experience.

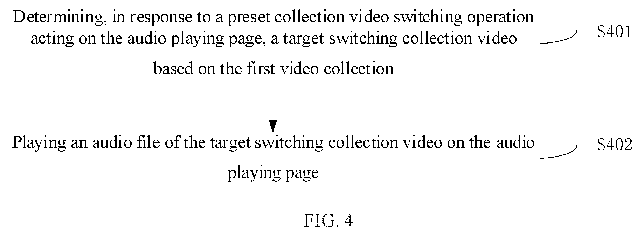

Based on the above method embodiments, in order to further improve the user experience, an embodiment of the present disclosure further provides a video processing method. Referring to FIG. 4, which is a flowchart of another video processing method provided by an embodiment of the present disclosure, the method includes:

S401: determining, in response to a preset collection video switching operation acting on the audio playing page of the target video, a target switching collection video based on a first video collection to which the target video belongs.

In the embodiment of the present disclosure, the first video collection can include at least one video collection with a playing order, and the target video being presented on the audio playing page belongs to the first video collection; specifically, the target video can be any video in the first video collection.

In the embodiment of the present disclosure, the preset collection video switching operation acting on the audio playing page can be a leftward slide operation or a rightward slide operation acting on the audio playing page, etc. Through the leftward slide operation or the rightward slide operation acting on the audio playing page, audio files corresponding to various videos in the first video collection can be switched and played.

In the embodiment of the present disclosure, when a preset collection video switching operation acting on the audio playing page is received, the first video collection to which the target video belongs is firstly determined, and then a target switching collection video is determined according to the playing order of the collection videos in the first video collection.

Specifically, when a leftward slide operation acting on the audio playing page of the target video is received, according to the playing order of the target video in the first video collection, a previous collection video adjacent to the target video in the first video collection is determined as the target switching collection video; when a rightward slide operation acting on the audio playing page of the target video is received, according to the playing order of the target video in the first video collection, a next collection video adjacent to the target video in the first video collection is determined as the target switching collection video.

S402: playing an audio file of the target switching collection video on the audio playing page.

In the embodiment of the present disclosure, firstly, in response to a preset collection video switching operation acting on the audio playing page, a target switching collection video corresponding to the target video is determined based on the first video collection, and then the audio file corresponding to the target switching collection video is played on the audio playing page.

In the video processing method provided by the embodiment of the present disclosure, based on a preset collection video switching operation on the audio playing page, the function of determining a target switching collection video and playing the audio file corresponding to the target switching collection video on the audio playing page can be triggered, thereby further enriching the video-based interactive function and improving the user experience.

On the basis of the above embodiments, in order to further enrich the interactive function in the video playing process, it can trigger, through a trigger operation acting on the audio cover display region on the audio playing page, entering a video playing pure mode, and playing the target video based on the video playing pure mode.

In the embodiment of the present disclosure, the trigger operation on the audio cover display region on the audio playing page is used to trigger entering a video playing pure mode, wherein the video playing pure mode is used to hide displaying of the functional controls on the video playing page.

In the embodiment of the present disclosure, the trigger operation on the audio cover display region on the audio playing page can include a long press operation on the audio cover display region, and can also include a click operation on the audio cover display region, etc., which is used to achieve the effect of triggering to enter the video playing pure mode.

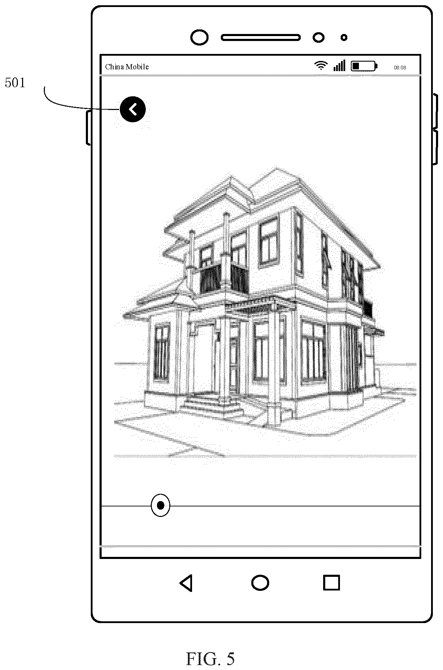

As shown in FIG. 3, when a long press operation acting on the audio cover display region is received, the audio playing page enters a video playing pure mode. As shown in FIG. 5, which is a schematic diagram of a page of a video playing pure mode provided by an embodiment of the present disclosure, in the video playing pure mode, it hides displaying of the functional controls on the audio playing page. The functional controls on the audio playing page refer to controls used to trigger interactive functions on the audio playing page, such as the speed playing manipulation control, the comment control, etc., as shown in FIG. 3.

As shown in FIG. 5, in the video playing pure mode, the functional controls displayed at the bottom of the audio playing page as shown in FIG. 3 are hidden, reducing the interference of the displayed functional controls on the video picture when playing the video for the user, thereby improving the user's viewing experience during video playing.

In the process of playing the target video in the video playing pure mode, if the user wants to return to the audio playing page, it can exit the video playing pure mode and return to the audio playing page by triggering a preset return operation in the video playing pure mode, and the audio file corresponding to the target video continues to be played on the audio playing page based on the playing progress of the target video in the video playing pure mode.

In the embodiment of the present disclosure, the preset return operation acting on the video playing pure mode can include a variety of methods, such as a click operation on a return control set on the video playing page in the video playing pure mode, or a leftward slide operation on any blank position of the video playing page in the video playing pure mode, etc.

As shown in FIG. 5, a return control 501 is set on the video playing page in the video playing pure mode. When a click operation on the return control 501 is received, it returns to the audio playing page shown in FIG. 3 from the video playing pure mode, and the audio file corresponding to the target video continues to be played on the audio playing page based on the playing progress of the target video.

In an optional implementation, when playing of the target video in the video playing pure mode is finished, it can automatically return to the audio playing page corresponding to the target video, determine a target switching audio file based on the video information stream corresponding to the target video, and then play the target switching audio file on the audio playing page.

In another optional implementation, the current video can be played in a loop in the video playing pure mode before a preset return operation acting on the video playing pure mode is received.

In the video processing method provided by the embodiment of the present disclosure, firstly, when a trigger operation acting on the audio cover display region on the audio playing page is received, the video playing pure mode is entered, and then the target video continues to be played in the video playing pure mode according to the original playing progress. As can be seen, the embodiment of the present disclosure can trigger the video playing function based on the video playing pure mode through the trigger operation acting on the audio cover display region, thus enriching the interactive function in the video playing process and improving the video watching experience of the user.

In addition, the embodiment of the present disclosure can further trigger the function of returning to the audio playing page through the preset return operation acting on the video playing pure mode; and on the audio playing page, the audio file corresponding to the target video continues to be played based on the playing progress of the target video, which further enriches the interactive function in the video playing process, and improves the video watching experience of the user.

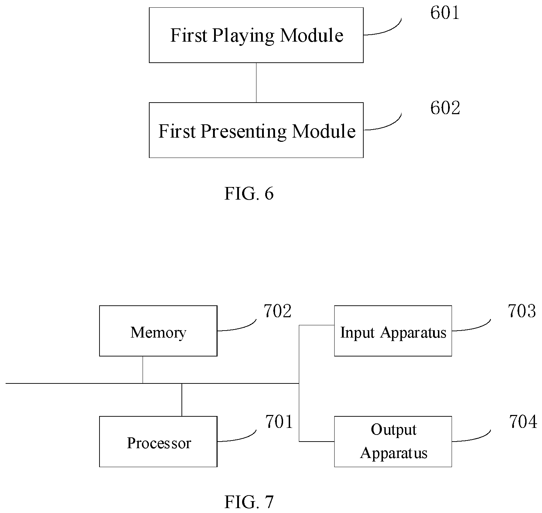

Based on the above method embodiments, the present disclosure further provides a video processing apparatus. Referring to FIG. 6, which is a schematic structural diagram of a video processing apparatus provided by an embodiment of the present disclosure, the apparatus includes:
a first playing module 601, configured to switch, in response to a preset trigger operation acting on a video playing page of a target video, to an audio playing page from the video playing page, and play an audio file of the target video on the audio playing page;
a first presenting module 602, configured to present, based on a playing progress of the audio file, a video picture in the target video synchronously in an audio cover display region on the audio playing page.

In an optional implementation, the apparatus further includes:
a second presenting module, configured to update, in response to an adjustment operation on the playing progress of the audio file, the video picture presented in the audio cover display region synchronously.

In an optional implementation, the apparatus further includes:
a second playing module, configured to enter, in response to a trigger operation on the audio cover display region, a video playing pure mode, and play the target video based on the video playing pure mode; wherein the video playing pure mode is used to hide displaying of a preset video playing functional control.

In an optional implementation, the apparatus further includes:
an exiting module, configured to exit, in response to a preset return operation acting on the video playing pure mode, the video playing pure mode, and return to the audio playing page;
a third playing module, configured to play, based on a playing progress of the target video in the video playing pure mode, the audio file of the target video on the audio playing page.

In an optional implementation, the apparatus further includes:
a first determining module, configured to determine, in response to a preset switching operation acting on the audio playing page, a target switching audio file based on a video information stream corresponding to the target video; wherein the target switching audio file is an audio file of a target switching video corresponding to the target video;
a fourth playing module, configured to play the target switching audio file on the audio playing page.

In an optional implementation, the apparatus further includes:
a fifth playing module, configured to switch, in response to a preset return operation acting on the audio playing page, back to the video playing page from the audio playing page, and play the target video on the video playing page based on the playing progress of the audio file.

In an optional implementation, the first playing module is specifically configured to:
present, in response to a multi-finger pinch operation acting on the video playing page of the target video, the video picture currently displayed on the video playing page which is zoomed out along an operation direction of the multi-finger pinch operation, in the audio cover display region on the audio playing page.

In an optional implementation, the first playing module is specifically configured to:
switch, in response to a long press operation on an audio playing mode switching control on the video playing page of the target video, to the audio playing page from the video playing page.

In an optional implementation, the target video belongs to a first video collection; the apparatus further includes:
a second determining module, configured to determine, in response to a preset collection video switching operation acting on the audio playing page, a target switching collection video based on the first video collection;
a sixth playing module, configured to play an audio file of the target switching collection video on the audio playing page.

In the video processing apparatus provided by the embodiment of the present disclosure, firstly, in response to a preset trigger operation acting on a video playing page of a target video, the video playing page is switched to an audio playing page, and an audio file of the target video is played on the audio playing page; and then, in an audio cover display region on the audio playing page, a video picture in the target video is synchronously presented based on a playing progress of the audio file. As can be seen, the embodiment of the present disclosure can achieve the effect of playing the audio file corresponding to the target video on the audio playing page and synchronously presenting the video picture in the target video in the audio cover display region, thus enriching the video-based interactive function and improving the user experience.

In addition to the above method and apparatus, an embodiment of the present disclosure further provides a computer-readable storage medium, instructions are stored on the computer-readable storage medium, and when the instructions are run on a terminal device, the terminal device is caused to implement the video processing method provided by the embodiment of the present disclosure.

An embodiment of the present disclosure further provides a computer program product, the computer program product includes a computer program or computer instructions, and when the computer program/instructions are executed by a processor, the video processing method provided by the embodiment of the present disclosure is implemented.

In addition, an embodiment of the present disclosure further provides a video processing device, as shown in FIG. 7, which can include:
a processor 701, a memory 702, an input apparatus 703 and an output apparatus 704. The number of processors 701 in the video processing device can be one or more, and one processor is taken as an example in FIG. 7. In some embodiments of the present disclosure, the processor 701, the memory 702, the input apparatus 703 and the output apparatus 704 can be connected through a bus or other means, wherein the connection through a bus is taken as an example in FIG. 7.

The memory 702 can be used to store software programs and modules, and the processor 701 executes various functional applications and data processing of the video processing device by running the software programs and modules stored on the memory 702. The memory 702 can mainly include a program storage area and a data storage area, wherein the program storage area can store an operating system, an application program required by at least one function, and the like. In addition, the memory 702 can include a high-speed random access memory, and can also include a non-volatile memory, such as at least one magnetic disk storage device, flash memory device, or other volatile solid-state memory devices. The input apparatus 703 can be used to receive digital or character information being input and generate signal input related to user settings and functional control of the video processing device.

Specifically, in the present embodiment, the processor 701 may load, according to the following instructions, executable files corresponding to the processes of one or more application programs into the memory 702, and the processor 701 may run the application programs stored on the memory 702, thus realizing various functions of the above video processing device.

It should also be noted that in the present disclosure, relationship terms, such as "first" and "second", etc., are only used to distinguish one entity or operation from another entity or operation, and do not necessarily require or imply any actual relationship or order between these entities or operations. Moreover, the terms "including", "containing", or any other variations thereof are intended to encompass non-exclusive inclusion, such that a process, a method, an item, or a device that includes a series of elements not only includes those elements, but also other elements that are not explicitly listed, or also includes elements inherent in such a process, method, item, or device. In the case without more limitations, an element limited by the statement "including one ..." does not exclude the existence of other identical elements in the process, method, item, or device that includes the element.

What has been described above is only the specific embodiment of the present disclosure, so that those skilled in the art can understand or implement the present disclosure. The various modifications to these embodiments may be apparent to those skilled in the art, and the general principles defined in the present disclosure may be achieved in other embodiments without departing from the spirit or scope of the present disclosure. Therefore, the present disclosure may not be limited to the embodiments shown, but rather to the widest scope consistent with the principles and novel features disclosed.

## Claims

1. A video processing method, comprising:
switching, in response to a preset trigger operation acting on a video playing page of a target video, to an audio playing page from the video playing page, and playing an audio file of the target video on the audio playing page;
presenting, based on a playing progress of the audio file, a video picture in the target video synchronously in an audio cover display region on the audio playing page.

2. The method according to claim 1, further comprising:
updating, in response to an adjustment operation on the playing progress of the audio file, the video picture presented in the audio cover display region synchronously.

3. The method according to claim lor 2, further comprising:
entering, in response to a trigger operation on the audio cover display region, a video playing pure mode, and playing the target video based on the video playing pure mode; wherein the video playing pure mode is used to hide displaying of a preset video playing functional control.

4. The method according to claim 3, further comprising:
exiting, in response to a preset return operation acting on the video playing pure mode, the video playing pure mode, and returning to the audio playing page;
playing, based on a playing progress of the target video in the video playing pure mode, the audio file of the target video on the audio playing page.

5. The method according to any one of claims 1-4, further comprising:
determining, in response to a preset switching operation acting on the audio playing page, a target switching audio file based on a video information stream corresponding to the target video, wherein the target switching audio file is an audio file of a target switching video corresponding to the target video;
playing the target switching audio file on the audio playing page.

6. The method according to any one of claims 1-5, further comprising:
switching, in response to a preset return operation acting on the audio playing page, back to the video playing page from the audio playing page, and playing the target video on the video playing page based on the playing progress of the audio file.

7. The method according to any one of claims 1-6, wherein the switching, in response to a preset trigger operation acting on a video playing page of a target video, to an audio playing page from the video playing page, comprises:
presenting, in response to a multi-finger pinch operation acting on the video playing page of the target video, the video picture currently displayed on the video playing page which is zoomed out along an operation direction of the multi-finger pinch operation, in the audio cover display region on the audio playing page.

8. The method according to any one of claims 1-7, wherein the switching, in response to a preset trigger operation acting on a video playing page of a target video, to an audio playing page from the video playing page, comprises:
switching, in response to a long press operation on an audio playing mode switching control on the video playing page of the target video, to the audio playing page from the video playing page.

9. The method according to any one of claims 1-8, wherein the target video belongs to a first video collection, and the method further comprises:
determining, in response to a preset collection video switching operation acting on the audio playing page, a target switching collection video based on the first video collection;
playing an audio file of the target switching collection video on the audio playing page.

10. A video processing apparatus, comprising:
a first playing module, configured to switch, in response to a preset trigger operation acting on a video playing page of a target video, to an audio playing page from the video playing page, and play an audio file of the target video on the audio playing page;
a first presenting module, configured to present, based on a playing progress of the audio file, a video picture in the target video synchronously in an audio cover display region on the audio playing page.

11. A computer-readable storage medium, storing instructions thereon, wherein when the instructions are run on a terminal device, the terminal device is caused to implement the method according to any one of claims 1-9.

12. A video processing device, comprising: a memory, a processor, and a computer program stored on the memory and executable by the processor, wherein when the processor executes the computer program, the method according to any one of claims 1-9 is implemented.

13. A computer program product, comprising a computer program or computer instructions, wherein when the computer program or computer instructions are executed by a processor, the method according to any one of claims 1-9 is implemented.
